(19) **Europäisches Patentamt / European Patent Office / Office européen des brevets**

(11) **EP 2 327 566 A1**

(12) **EUROPEAN PATENT APPLICATION**

(43) Date of publication:
**01.06.2011 Bulletin 2011/22**

(51) Int Cl.:
***B60B 27/00*** *(2006.01)*

(21) Application number: **10191553.6**

(22) Date of filing: **17.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.11.2009 IT TO20090898**

(71) Applicant: **Aktiebolaget SKF
415 50 Göteborg (SE)**

(72) Inventors:
• **Ferrero, Alessandro
I-10136, TORINO (IT)**
• **Nicastri, Fulvio
I-10060, GARZIGLIANA (Torino) (IT)**

(74) Representative: **Fioravanti, Corrado et al
Jacobacci & Partners S.p.A.
Corso Emilia 8
10152 Torino (IT)**

(54) **A flanged inner ring for a wheel hub**

(57) A flanged inner ring (1) for a wheel hub comprises a cylindrical body (2) providing a shoulder (3) and a mounting cylindrical surface (4) which is partially hardened and is axially bounded between the shoulder (3) and a rolled edge (5). A small inner ring (6) provides an inner cylindrical surface (61) mounted on the mounting surface (4), two radial annular faces (63, 62) in contact with the shoulder (3) and with the rolled edge, respectively, and two radiused surfaces (65, 64) connecting the inner cylindrical surface (61) to the annular faces (63, 62). The mounting surface (4) has a hardened area (z) the axial length (lz) of which is less than or equal to an axial length (10) of the small inner ring (6) minus a length of a connecting radius (R1) of a first one (64) of the two radiused surfaces (64, 65).

Fig. 1

EP 2 327 566 A1

**Description**

The present invention relates to a flanged inner ring for a wheel hub.

Flanged inner rings of known type have an axis of rotation and comprise:

- a cylindrical body coaxial with the axis and provided with a first inner annular raceway for a first row of rolling-contact bodies; and
- a small inner ring which provides a second inner annular raceway for a respective second row of rolling-contact bodies and is forcedly mounted on a mounting surface formed on the outside of the cylindrical body so as to be arranged in axial abutment against a shoulder axially bounding the mounting surface on the so-called "outboard" side.

The inner rings of the above described type further comprise a rolled edge which forms an end portion of the cylindrical body and is arranged by means of rolling against the small inner ring so as to close axially the small inner ring against the shoulder.

The small inner ring has an inner cylindrical surface and two radiused shaped surfaces connecting the inner cylindrical surface to respective annular faces. During rolling of the rolled edge, a face of the two annular faces, situated on the outboard side, rests against an annular surface of the shoulder, while a face situated on the inboard side is directly engaged by the rolled edge.

The inner ring is subjected to an induction-hardening heat treatment in order to impart given mechanical characteristics to the cylindrical body, particularly on the first annular raceway for the rolling-contact bodies and the mounting surface. In particular, along the mounting surface the heat treatment area of the mounting surface is commonly applied, from the shoulder, over a maximum length not greater than 80% of the difference between the value of the axial length of the small ring and the overall axial dimension of the radiused connecting surface on the inboard side.

The abovementioned limitation governing the axial extension of the heat treatment area along the mounting surface is due to the need not to perform heat treatment of the end part of the cylindrical body which is subjected to rolling in order to form the rolled edge. However, this limitation gives rise to a number of technical problems which occur precisely because of the effect of rolling since the different mechanical characteristics of the mounting surface as well as the deformation of the inner ring may result in separation of the inner ring from the mounting surface or may result in the small inner ring and the inner ring no longer being assembled adjacent to each other, with the possibility of free rotation of the former with respect to the latter.

The object of the present invention is to provide a flanged inner ring for a wheel hub, which does not have the above discussed drawbacks.

According to the present invention there is provided a flanged inner ring for a wheel hub, the inner ring comprising:

- a cylindrical body provided externally with a shoulder and with a mounting surface which is partially hardened and is bounded, on a first side, by the shoulder and, on a second side axially opposite the first side, by a rolled edge; and
- a small inner ring, which is bounded by an inner cylindrical surface forcedly mounted on the mounting surface, by two annular faces placed in contact with the shoulder and with the rolled edge, respectively, and by two radiused surfaces connecting the inner cylindrical surface to the annular faces;

the inner ring being characterized in that the mounting surface has a hardened area whose axial length is less than or equal to an axial length of the small inner ring minus a length of a connecting radius of a first radiused connecting surface of the two radiused connecting surfaces.

The invention will now be described with reference to the accompanying drawings which show a non-limiting exemplary embodiment thereof and in which:

- Figure 1 is a cross-sectional view, with parts removed for greater clarity, of a preferred embodiment of the inner ring according to the present invention; and
- Figure 2 is a cross-sectional view of a wheel hub assembly implementing the inner ring of Figure 1.

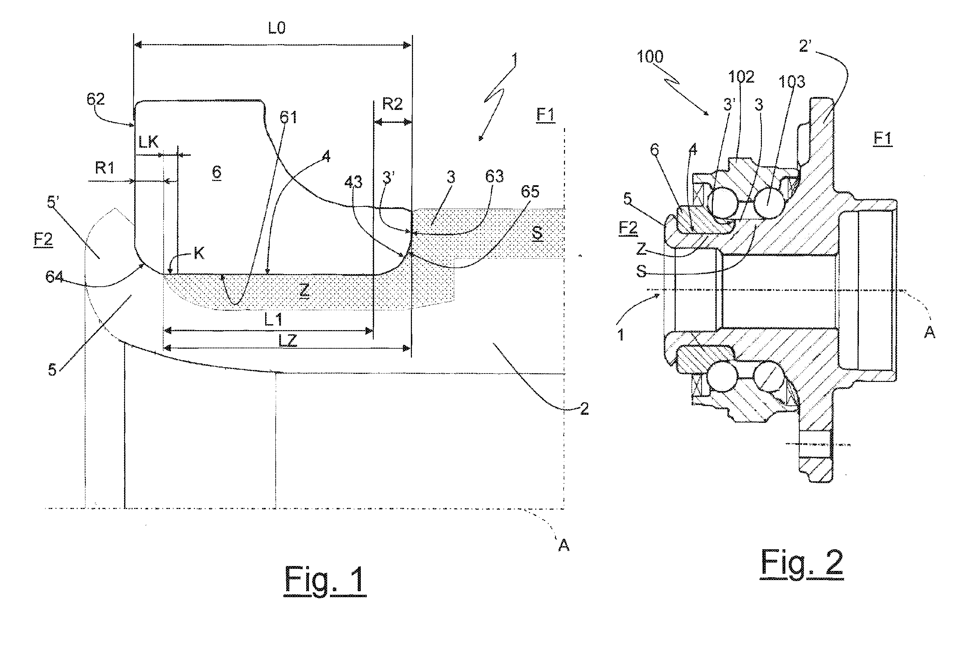

With reference to Figure 1, 1 denotes in its entirety a flanged inner ring which is made of forged and non-hardened metallic material with a Vickers hardness number generally less than 300 and has an axis of rotation A.

The inner ring 1 has a flange 2' (Figure 2) for supporting a wheel (known and not shown) and comprises a cylindrical body or portion 2 coaxial with the axis A and provided externally with a shoulder 3 and a mounting cylindrical surface 4 which is axially bounded, on a first side F1, i.e. so-called "outboard" side, by the shoulder 3, and on a second side F2, i.e. so-called "inboard" side, opposite the side F2, by a rolled edge 5. The mounting surface 4 is partially hardened, has an outer diameter with dimensions smaller than the dimensions of the outer diameter of the shoulder 3 and is connected to a front annular surface 3' of the shoulder 3 by means of a radiused connecting surface 43.

The inner ring 1 comprises, moreover, a small inner ring 6 which is bounded by an inner cylindrical surface 61 forcedly mounted on the mounting surface 4, by two radial annular faces 62 and 63 placed in contact with the rolled edge 5 and with the shoulder 3, respectively, and by two radiused shaped surfaces 64 and 65 connecting the inner cylindrical surface 61 to the faces 62 and 63, respectively.

The edge 5 is rolled directly against the small inner ring 6, deforming an end portion 5' of the cylindrical body 2 so that this portion 5' is positioned against both the face 62 and the surface 64, reproducing substantially the shape of the latter.

The cylindrical surface 61 has an axial length L1 with dimensions less, i.e. shorter, than an axial length L0 of the small inner ring 6, while the surfaces 64 and 65 have respective radii R1 and R2 of curvature. The sum of the projection of the radii R1 and R2 along the axis A and the axial length L1 is equal to the axial length L0 of the small ring 6.

In the exemplary embodiment shown, the surface 65 has a shape substantially complementing that of the radiused connecting surface 43; however, in order to prevent possible interference between the said surface 65 and connecting surface 43, the surface 65 is provided with a relief so as to create a passage between the surface 65 and the radiused connecting surface 43. In the description below explicit reference will be made to the case where the said passage is absent.

The inner ring 1 is subjected to a hardening treatment in order to increase the hardness of its material. This heat treatment, generally performed by means of induction, extends inside the inner ring 1 over a given radial depth and affects not only the shoulder 3, but also the axial portion S extending from the shoulder 3 towards the flange 2', and the mounting surface 4.

In particular, the surface 4 has, at least extending from the shoulder 3, a hardened area Z, in which the metallic material of the inner ring 1 has a Vickers hardness number greater than 500 and the axial length LZ of which, measured from the surface 3', is such as to allow rolling of the portion 5' against the small inner ring 6 avoiding any separation - even partially - of the cylindrical surface 61 from the surface 4 itself.

For the purposes described above, the axial length LZ has a value variable within the following range of values:

$$L0 - (R1 + LK) \leq LZ \leq L0 - R1$$

where LK is the axial length of a safety portion K which, in the example of embodiment shown, has an axial value less than or equal to 2 mm depending, essentially, on the precision of the induction-hardening devices currently used.

In other words, the value of the axial length LZ of the hardened area Z is less than or equal to the difference between the value of the axial length L0 and the value of the connecting radius R1 of the surface 64 and is greater than or equal to the difference between the value of the axial length L0 and the sum of the value of the radius R1 and the length LK of the safety portion K.

When the axial length LZ of the hardened area Z lies within the range of values defined above, the portion 5' may in any case always be rolled against the small inner ring 6, without causing any problems in the hardened area Z itself, and the surface 63 does not become detached from the surface 4 since the entire surface 63 is arranged in contact with the area Z.

The flanged inner ring 1 for a wheel hub as described above not only prevents separation of the small ring 6 and the surface 4, but also prevents transmission of the radial deformation during the rolling process to the small ring 6, with advantages which can be defined in terms of lesser susceptibility of the small ring 6 to fatigue and corrosion and a greater resistance of the small ring 6 to breakage.

The invention described and illustrated here also relates, as shown in Figure 2, to a wheel hub assembly 100 comprising an inner ring 1 as described above, an outer ring 102 and two series of rolling-contact bodies 103 arranged between the inner ring 1 and the outer ring 102 so as to allow relative rotation thereof. A series of rolling-contact bodies 103 is arranged in contact with the small ring 6, while the other series of rolling-contact bodies 103 rotates directly in contact with the inner ring 1, in particular with the portion S of the inner ring 1.

It is understood that the invention is not limited to the embodiment which is described and illustrated here and is to be regarded as an exemplary embodiment of the flanged inner ring for a wheel hub. Rather, the invention may be subject to further modifications as regards the shapes and arrangements of parts and constructional and assembly details.

**Claims**

**1.** A flanged inner ring (1) for a wheel hub, the inner ring (1) comprising:

- a cylindrical body (2) provided externally with a shoulder (3) and with a mounting surface (4), which latter is partially hardened, and is bounded, on a first side (F1), by the shoulder (3), and, on a second side (F2) axially opposite the first side (F1), by a rolled edge (5); and

- a small inner ring (6), which is bounded by an inner cylindrical surface (61) mounted to the mounting surface (4), by two annular faces (63, 62) placed in contact with the shoulder (3) and with the rolled edge (5), respectively, and by two radiused connecting surfaces (65, 64) connecting the inner cylindrical surface (61) to the annular faces (63)(62);

the inner ring (1) being **characterized in that** the mounting surface (4) has a hardened area (Z) the axial length (LZ) of which is less than or equal to an axial length (L0) of the small inner ring (6) minus a length of a connecting radius (R1) of a first radiused connecting surface (64) of the two radiused connecting surfaces (64, 65).

2. An inner ring according to Claim 1, **characterized in that** the mounting surface (4) has a hardened area (Z) the axial length of which is greater than or equal to an axial length of the small inner ring (6) minus a length of a connecting radius (R1) of a first radiused connecting surface (64) of the two radiused connecting surfaces (64, 65) and an axial length (LK) of a safety portion (K).

3. An inner ring according to Claim 2, **characterized in that** the axial length (LK) of the safety portion (K) is less than or equal to 2 mm.

4. An inner ring according to Claim 3, **characterized in that** the first radiused connecting surface (64) of the two radiused connecting surfaces (64)(65) is engaged by said rolled edge (5).

5. An inner ring according to Claim 4, **characterized in that** the hardened area (Z) extends axially from the shoulder (3).

6. A wheel-hub assembly (100) comprising a flanged inner ring (1) according to any one of the preceding claims.

Fig. 1

Fig. 2

EP 2 327 566 A1

Europäisches
Patentamt

European
Patent Office

Office européen
des brevets

**EUROPEAN SEARCH REPORT**

Application Number

EP 10 19 1553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 110 756 A (NSK LTD [JP]) 27 June 2001 (2001-06-27) * figure 9A * | 1-6 | INV. B60B27/00 |
| | ----- | | |
| X | JP 2002 283806 A (NTN TOYO BEARING CO LTD) 3 October 2002 (2002-10-03) * figure 4 * | 1-6 | |
| | ----- | | |
| X | EP 1 375 196 A (NTN TOYO BEARING CO LTD [JP]) 2 January 2004 (2004-01-02) * figure 9 * | 1-6 | |
| | ----- | | |

TECHNICAL FIELDS
SEARCHED     (IPC)

B60B

The present search report has been drawn up for all claims

| Place of search | Date of completion of the search | Examiner |
|---|---|---|
| Munich | 11 January 2011 | Hassiotis, Vasilis |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 19 1553

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2011

| Patent document cited in search report | | Publication date | Patent family member(s) | | Publication date |
|---|---|---|---|---|---|
| EP 1110756 | A | 27-06-2001 | DE 60038092 T2 | | 19-02-2009 |
| | | | US 2002012486 A1 | | 31-01-2002 |
| JP 2002283806 | A | 03-10-2002 | CN 101402302 A | | 08-04-2009 |
| EP 1375196 | A | 02-01-2004 | CN 1460074 A | | 03-12-2003 |
| | | | CN 101025202 A | | 29-08-2007 |
| | | | EP 2189304 A2 | | 26-05-2010 |
| | | | EP 2253483 A2 | | 24-11-2010 |
| | | | WO 02078979 A1 | | 10-10-2002 |
| | | | US 2004120622 A1 | | 24-06-2004 |

EPO FORM P0459

For more details about this annex : see Official Journal of the European Patent Office, No. 12/82